# EUROPEAN PATENT SPECIFICATION

(11) **EP 4 508 461 B1**
(45) Date of publication and mention of the grant of the patent: **02.12.2026**
(21) Application number: 23718071.6
(22) Date of filing: 11.04.2023
(51) Int. Cl.: G01S 7/48, B64G 1/66, B64G 3/00, G01S 7/497, G01S 17/42, G01S 17/66, G01S 17/88

(54) **ORBITAL OBJECT IDENTIFICATION SYSTEM AND METHOD**
SYSTEM UND VERFAHREN ZUR IDENTIFIZIERUNG VON ORBITALEN OBJEKTEN
SYSTÈME ET PROCÉDÉ D'IDENTIFICATION D'OBJET ORBITAL

(30) Priority: 12.04.2022 EP 22167981
(43) Date of publication of application: 19.02.2025
(73) Proprietor: Nederlandse Organisatie voor toegepast- natuurwetenschappelijk onderzoek TNO, 2595 DA 's-Gravenhage (NL)
(72) Inventor: DAY, James Peter Robert, 2595 DA 's-Gravenhage (NL); SILVESTRI, Fabrizio, 2595 DA 's-Gravenhage (NL); FERRARIO, Ivan, 2595 DA 's-Gravenhage (NL); CARON, Jerome, 2595 DA 's-Gravenhage (NL)
(74) Representative: V.O.
(86) International application number: PCT/NL2023/050186
(87) International publication number: WO 2023/200336

(56) References cited:
- US-A1- 2020 208 988
- US-A1- 2021 325 661

## Description

### BACKGROUND

The present disclosure is directed to a cooperative orbital object identification system.

The present disclosure is further directed to a cooperative orbital object identification method.

The last decade has seen an explosive growth in the number of CubeSat launches into Low Earth Orbit. Typically, CubeSats are launched in batches by a single launch vehicle into very similar orbits with low spatial and temporal separation. As a result, it can take weeks or months to identify each new CubeSat. Indeed, a significant proportion of CubeSats may never be identified, often due to in-orbit failure. In all cases, at the end of their operation the satellites become debris, for which new international policies are planned to make satellite owners and operators responsible for their disposal.

Therefore an identification technique is required to simply and unambiguously identify individual satellites with similar orbital characteristics, not only at beginning-of-life but also at end-of-life when all other on-board systems may have failed. Such on-board identification is therefore also relevant for larger satellites at end-of-life. This will require the capability to uniquely identify the satellite, and therefore its owner, for accountability.

Hampf et al. propose a passive system of retroreflectors as an identification tag for satellites in "A path towards low-cost, high-accuracy orbital object monitoring", Proc. 8th European Conference on Space Debris (virtual), Darmstadt, Germany, 20-23 April 2021, published by the ESA Space Debris Office Ed. T. Flohrer, S. Lemmens & F. Schmitz, (http://conference.sdo.esoc.esa.int, May 2021)

Hampf et al. suggest that, advanced retroreflectors may provide means to identify targets uniquely. With little effort, retroreflectors can be modified to reflect back a target signature using properties of the laser light such as wavelength or polarization.

The suggested solution is indeed promising, in that it is a passive system, so that at the side of the orbital object, such as a satellite, no energy source is required. Hence, a satellite, even at the end of its life, can still be identified. Also, a potentially almost infinite set of unique signature can be provided by varying optical properties of the retroreflector.

Further, US 2021/325661 A1 discloses a modulating retroreflective piezoelectric multilayer film that comprises retroreflective elements, a piezoelectric layer, a photovoltaic layer, and an energy storage device. The stacked and transparent layered configuration of the film allows the retroreflective elements and the photovoltaic layer to be simultaneously illuminated by a narrow beam. The low power piezoelectric layer and the energy harvesting of the photovoltaic layer allow the retroreflector to be energetically self-sufficient and suitable for remote deployment. The flexible properties of the component layers allow the retroreflector to be adhered to nonplanar or irregular surfaces for the purpose of labeling and tagging.

Still further US 2020/208988 A1 provides systems and methods for identifying one or more passive optical identifier tag from a plurality of passive optical identifier tags. The method includes emitting light from a light source device. Further, the method includes transmitting, by said plurality of passive optical identifier tags, reflected light to a receiver. The method further includes reflecting, by the plurality of passive optical identifier tags, the emitted light with its unique set of wavelengths, said set of wavelengths being inferred by the corresponding reflection sequence.

### SUMMARY

It is an object of the present disclosure to provide an improved orbital object identification system that renders possible to provide tags with mutually different optical properties in an cost efficient manner.

In accordance therewith an improved orbital object identification system is provided as claimed in claim 1. The improved orbital object identification system comprises an identification station and at least one tagged orbital object. In the context of this description a tagged orbital object refers to an orbital object with a retroreflecting identification tag mounted thereon.

The identification station comprises an optical beam generator, transmission optics, receive optics, a demultiplexing unit, a detection unit and a signal processing unit

The optical beam generator is configured to generate at least one beam of optical radiation with controllable spectral properties and the transmission optics transmit the at least one beam in the direction of the identification tag.

The receive optics receive a portion of the optical radiation that is filtered and reflected by the tag and the demultiplexing unit separates the received portion of the optical radiation into a plurality of respective spectral components.

The detection unit has respective photodetection components that issue respective detection signals indicative of respective magnitudes of the respective spectral components. Based on the detection signals the signal processing unit identifies the tagged orbital object.

The retroreflecting identification tag of the tagged orbital object comprises a spectral filter with a surface area partitioned into respective surface area portions having respective, mutually different spectral characteristics.

Identification tags comprised in the improved orbital object identification system as claimed herein comprise a spectral filter with a plurality of spatially distributed filter elements having mutually different spectral characteristics. The identification station cannot perceive the pattern formed by the plurality of spatially distributed filter elements as such. The beams reflected by each of the spatially distributed filter elements arrive at the side of the identification station as a single mixed beam of radiation and the identifications station detects the spectral properties of this mixed beam. However, due to the fact that the spectral filter is composed of a plurality of spatially distributed filter elements with mutually different spectral characteristics, the individual filter elements can be selected from a relatively small standard set. For example with a set of less than ten filter elements it is already possible to provide thousands of unique tags.

In an embodiment a spatial surface of the spectral filter is A, and a surface area has surface area portions with respective spectral characteristics.

In an embodiment the wherein the spectral filter of the tag comprises respective bandpass filters in respective surface area portions. Bandpass filters can be manufactured in a relatively simple manner. Each bandpass filter is designed to transmit only optical radiation in a narrow wavelength range and reflects optical radiation outside that wavelength range. Only optical radiation that is transmitted through the bandpass filter is retroreflected and ultimately reaches the identification station. Optical radiation that is simply reflected by the bandpass filter cannot reach the identification station except in the rare occasion when the beam from the identification station strikes the bandpass filter at normal incidence.

Alternatively, the spectral filter of the tag comprises respective notch filters in respective surface area portions. Notch filters reflect only optical radiation in a particular wavelength range and transmit optical radiation outside that wavelength range. Only optical radiation that is transmitted through the notch filter is retroreflected and ultimately reaches the identification station. Optical radiation that is simply reflected by the notch filter cannot reach the identification station except in the rare occasion when the beam from the identification station strikes the notch filter at normal incidence. Whereas manufacturing costs for notch filters are higher than those for bandpass filters their use allows a larger number of combinations

Further embodiments are possible wherein the spectral filter comprises both bandpass filters and notch filters.

In an embodiment, surface area portions have a value k/K, wherein k and K are natural numbers and wherein k is in the range from 0 to K. Different elements j from a pallet set j = 1,..,J are assigned a portion kj/K of the surface for each of the spectral characteristics available in the pallet set, wherein the values kj and K are integers and wherein sum kj = K. Accordingly, therewith the tag is characterized with a vector: (k1/K, k2/K, ,kJ/K). In this way surface area portions are quantized. Therewith measurement noise can be avoided. A large value of K renders possible a large set of mutually different tags, but may increase the effect of noise. This may be circumvented by performing repeated identifications steps. Alternatively the identity of the tag may be encoded by the filter in a redundant manner, so that identification errors can be detected and identified.

In an example of this embodiment of the orbital object identification system the surface area portions each have a value of at least 1/K for each spectral characteristic in the pallet set of spectral characteristics. Accordingly each spectral characteristic of the pallet is assigned at least one area unit 1/K. This renders it possible to distinguish the at least one tagged orbital object from other objects. Should it be the case that the identification station does not perceive a particular spectral characteristic of the pallet set, it is clear that the perceived object is not one of a collection using the pallet set.

In another example the orbital object identification system further comprises a retroreflecting calibration tag mounted on the at least one orbital object. The calibration tag comprises a spectral filter with a respective predetermined, non-zero surface area portion for each spectral characteristic in a pallet set of spectral characteristics. Even if the identification tag does not have assigned non-zero surface area portions to one or more spectral characteristics in the pallet set, the presence of the calibration tag enables the identification station to distinguish the at least one tagged orbital object from an orbital object that is not part of the collection. This allows a more fine grained partitioning of the surface area of the identification tag, i.e. a higher value for K, and therewith a larger set of mutually distinct tags can be provided.

In some embodiments, the identification tag is one of a plurality of identification tags mounted in a distributed manner on the at least one tagged orbital object. Therein the plurality of identification tags have the same partitioning of their surface area for the mutually different spectral characteristics. Therewith the tagged orbital object can be properly identified regardless its spatial orientation.

In some embodiments the demultiplexing unit of the identification station comprises a chain of optical demultiplexing elements that are each configured to selectively redirect a respective spectral fraction of incoming optical radiation and to transmit a remaining spectral fraction of the incoming optical radiation so as to separate the received portion of the optical radiation into respective optical channels for the respective photodetection components. The chain of optical demultiplexing elements provides for a spectral demultiplexing of the received optical radiation with a minimum of optical losses as spectral components as substantially no radiation is absorbed therein. Respective spectral components of the received beam are redirected to respective photodetection components. In examples of these embodiments the demultiplexing elements are dichroic filters. In some examples the demultiplexing unit further comprises in at least one spectral channel at least one band-pass filter. The at least one band-pass filter can be selected to reject optical radiation in spectral bands that are not used as a component in the pallet set and therewith contribute to a suppression of detection noise.

In some embodiments the identification system further comprises a tracking module configured to track a position and/or attitude of an orbital object. For example this is achieved in that the identification system is configured to estimate the distance of the orbital object with a time of flight measurement. Additionally or alternatively, this is achieved in an example wherein the identification system is configured to estimate attitude of the orbital object from the direction from which its tag reflects the optical radiation. In some examples the tracking module is configured to estimate the position in space from a perceived direction and the estimated distance.

The present disclosure further pertains to a method of identifying an orbital object according to claim 11.

According to the improved method the retroreflecting identification tag is provided with a spectral filter that has a surface area partitioned into respective surface area portions having respective, mutually different spectral characteristics.

### BRIEF DESCRIPTION OF THE DRAWINGS

FIG. 1 schematically shows an embodiment of an improved orbital object identification system comprising an identification station and a tagged orbital object;
FIG. 2 shows exemplary tags suitable for use with a tagged orbital object in said embodiment;
FIG. 3 shows another example of a tag suitable for use with a tagged orbital object in said embodiment;
FIG. 4 shows a table that indicates a number of mutually distinct tags as a function of a number of available mutually different spatial characteristics and a number indicative for a granularity with which the surface area of the tags is partitioned;
FIG. 5 shows an alternative embodiment of the improved orbital object identification system.

### DETAILED DESCRIPTION OF EMBODIMENTS

Like reference symbols in the various drawings indicate like elements unless otherwise indicated.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete.

In the drawings, the size and relative sizes of layers and regions may be exaggerated for clarity.

In other instances, well known methods, procedures, and components have not been described in detail so as not to obscure aspects of the present invention.

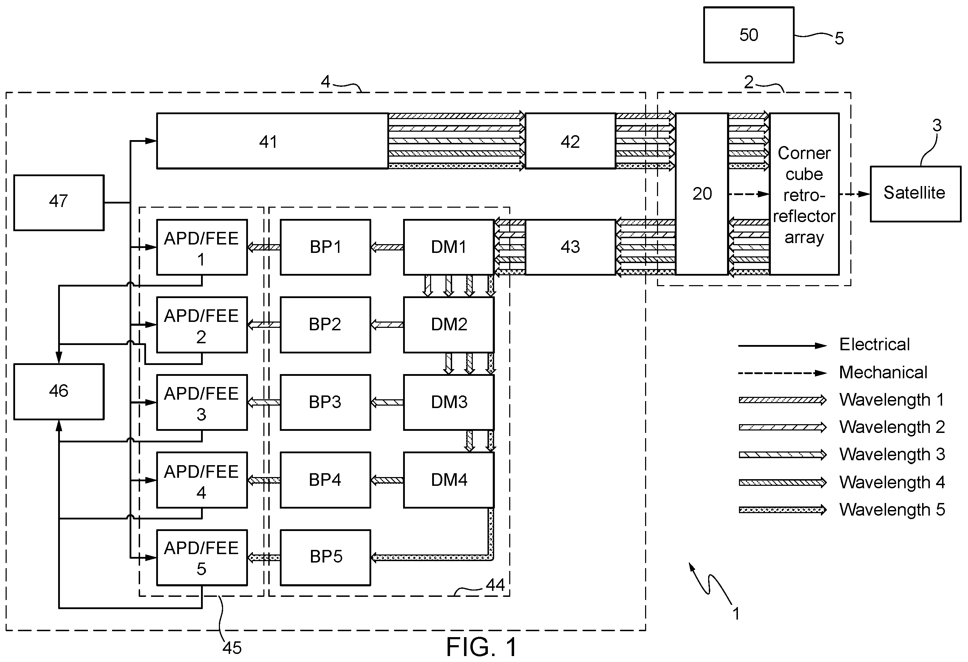

FIG. 1 schematically shows an orbital object identification system 1 that comprises a retroreflecting identification tag 2 mounted on an orbital object 3, such as a satellite and an identification station 4.

The identification station 4 comprises an optical beam generator 41 that is configured to generate at least one beam of optical radiation with controllable spectral properties. In the context of this application, optical radiation is defined as radiation in the visible to near-infrared region of the electromagnetic spectrum, e.g. from about 400 nm to about 2500 nm. In one example, the optical beam generator 41 comprises a single optical beam source, e.g. a laser with a tunable wavelength and the identification system is configured to cause the optical beam source to generate the at least one beam with a time dependent central wavelength. In another example, the optical beam generator 41 comprises a suite of optical beam sources having mutually different fixed wavelengths. In that example the identification system is configured to selectively activate one or more of the optical beam sources. In a still further example the optical beam generator comprises one or more sources with a tunable wavelength and one or more sources with mutually different fixed wavelengths.

As shown further in FIG. 1, the identification station 4 comprises transmission optics 42 to transmit the at least one beam in the direction of the identification tag of the tagged orbital object 3 to be identified. Receive optics 43 are further provided to receive a portion of the optical radiation that is filtered and retroreflected by the tag. In the example of FIG. 1, the transmission optics 42 and the receive optics 43 are mutually separate modules. In alternative embodiments a single module is provided that both serves for transmission and receiving. In again other embodiments the transmission optics 42 and the receive optics 43 share one or more components but also have one or more respective proper components. Typically the transmission and receive optics include a controller to control a spatial direction in which the at least one beam is transmitted and to fine tune control of the spatial direction for optimizing receipt of the radiation from a tag of an orbital object that is currently being queried. As such a skilled person can readily provide a specific implementation. Accordingly, no further details are provided here in order not to obscure the description.

As shown in FIG. 1, the identification station comprises a demultiplexing unit 44 that is configured to separate the received portion of the optical radiation into a plurality of respective spectral components. In the example shown, the demultiplexing unit 44 has two stages. A first stage comprises the actual demultiplexing elements DM1, DM2, DM3, DM4, and a second stage comprises band-pass filters BP1, BP2, BP3, BP4 and BP5. Each of the demultiplexing elements, e.g. dichroic mirrors, selectively directs a respective spectral fraction to a respective one of the band path filters. The last demultiplexing elements DM4 directs one spectral fraction to the band-pass filter BP4 and the remaining spectral fraction to band-pass filter BP5. The other demultiplexing elements DM1, DM2, DM3 direct the remaining, non redirected spectral fraction to their respective successor DM2, DM3, DM4. The two-stage demultiplexing arrangement optimally splits the received optical radiation with a minimal optical loss. The band-pass filters BP1, BP2, BP3, BP4 and BP5 are provided reject spectral components that are not expected to be detected in the received optical radiation as they do not belong to spectral pallet that is used for the set of tagged orbital objects that are comprised in the system. Therewith the bandpass filter contribute to a reduction of noise that could originate from stray radiation and the like.

The identification station further comprises a detection unit 45 with respective photodetection components denoted as APD/FEE 1, 2, 3, 4, 5 that are provided to issue respective detection signals indicative of respective magnitudes of the respective spectral components transmitted by the band-pass filters BP1, BP2, BP3, BP4 and BP5. In the embodiment shown, the photodetection components each comprise an avalanche photodetector APD and a front end electronic unit. The front end electronic unit integrates photoelectrons acquired by each APD during a certain time period and generates a digital signal indicative for a value of the integration result. Whereas the present example is based on an analysis based on five spectral components, it will be appreciated that also embodiments are suitable based on a lower or higher number of spectral components.

As shown in FIG. 1, the identification station further comprises a signal processing unit 46 to identify the orbital object on the basis of the detection signals provided by the photodetection components APD/FEE 1, 2, 3, 4, 5.

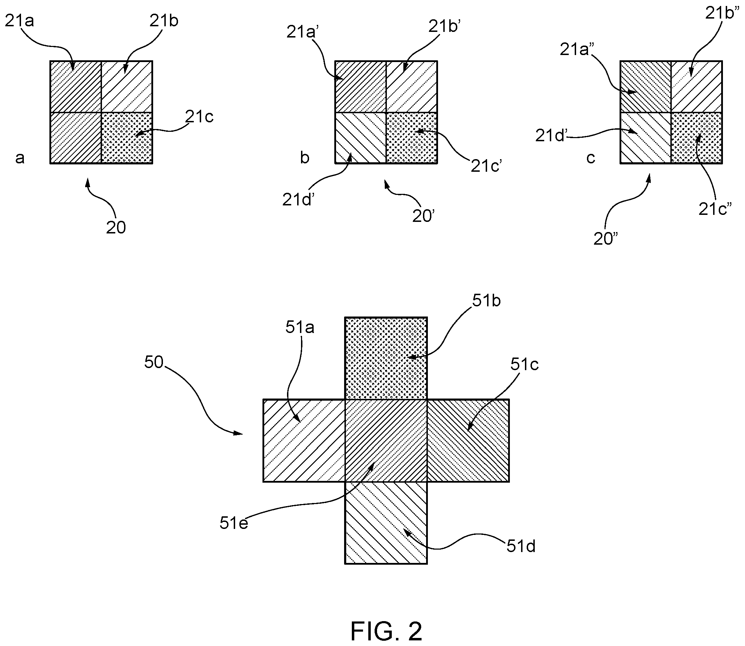

As schematically shown in FIG. 1, the orbital object identification system 1 comprises a retroreflecting identification tag 2 mounted on an orbital object 3. In practice, the tag 2 is one of a plurality of tags mounted on respective orbital objects. As schematically shown in FIG. 2, the tags are mutually distinct in that each tag comprises a spectral filter 20, 20', 20" that has a surface area partitioned into respective surface area portions having respective, mutually different spectral characteristics. For example the spectral filter 20 has three surface area portions 21a, 21b, 21c, and each surface area portion has a proper spectral characteristics different from the other surface area portions.

In the example shown, the spectral characteristics are selected from a pallet of five spectral properties, symbolically referred to as Red (R), Orange (O), Yellow (Y), Green (G), Blue (B). The spectral characteristics of the filters can be specified as a vector indicating the respective surface area portions present for each of the spectral characteristics. For example the spectral filter 20 is characterized by the vector SC20 = (0.25, 0,0,0.25, 0.5), the spectral filter 20' is characterized by the vector SC20'= (0.25, 0, 0.25, 0.25, 0.25) and the spectral filter 20" by the vector SC20"= (0.25, 0.25, 0.25, 0.25, 0).

The portion of the surface area assigned to each of the spectral characteristics in the pallet is quantized. Therewith measurement noise can be easily avoided. In a general case, different elements j from a pallet set j = 1,..,J are assigned a portion kj/K of the surface for each of the spectral characteristics available in the pallet set, wherein the values kj and K are integers and wherein sum kj = K. Therewith the tag is characterized with (k1/K, k2/K, ,kJ/K)

A larger set of mutually different tags is made possible by increasing the number of available spectral characteristics in the pallet. Alternatively or additionally, this is possible by increasing the value of K or allowing also non-rational surface area partitions. This may increase the effect of noise. This disadvantage may be circumvented by performing repeated identifications steps. Alternatively or additionally, the identity of the tag may be encoded by the filter in a redundant manner, so that identification errors can be detected and possibly optionally corrected.

Therewith, it should be taken into account that tags having the filter elements in mutually different geometrical arrangements but having the same distribution of surface area cannot be distinguished.

In some embodiments the orbital object identification system 1 further comprises a retroreflecting calibration tag 5 mounted on the (at least one) orbital object 3. As shown schematically in the lower part of FIG. 2, the calibration tag 5 comprises a spectral filter 50 with a respective predetermined, non-zero surface area portion 51a, 51b, 51c, 51d, 51e for each spectral characteristic in the pallet set of spectral characteristics. In the example shown, the spectral filter of the calibration tag is characterized by the vector SC50= (0.2, 0.2, 0.2, 0.2, 0.2).

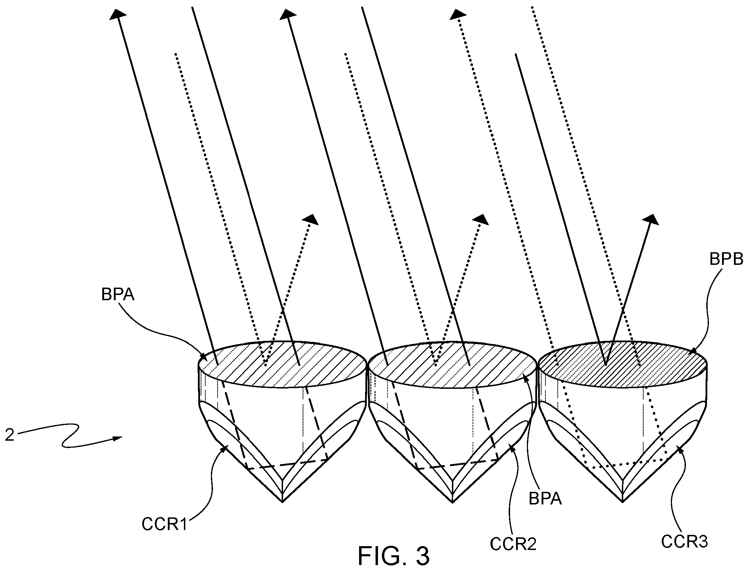

FIG. 3 shows an embodiment of a tag 2 having two retroreflecting elements CCR1, CCR2 with a bandpass filter of a first type BPA and a further retroreflecting element CCR3 with a bandpass filter of a second type BPB. Presuming that the bandpass filters are selected from a pallet of three types, then this exemplary tag is characterized by the vector (2/3, 1/3, 0), i.e. approximately (0.667, 0.333,0).

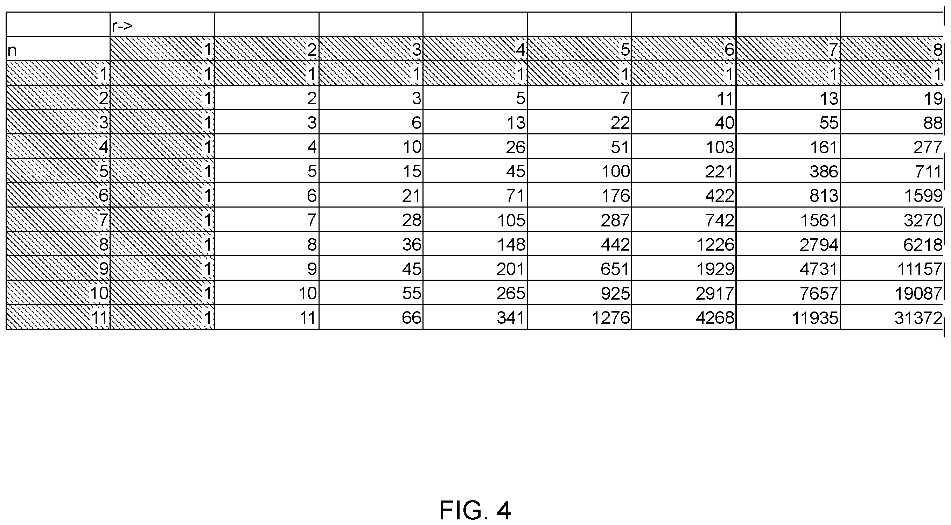

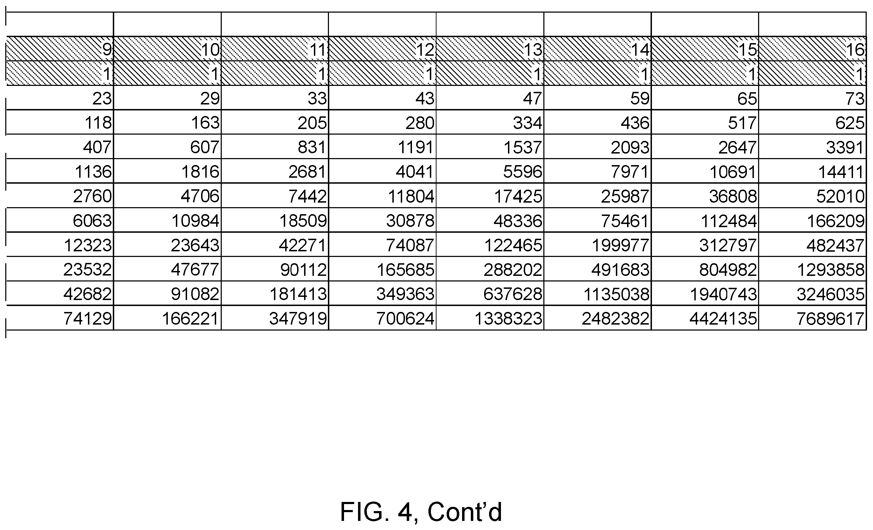

FIG. 4 shows a table indicating the number of mutually distinguishable tags that can be realized where "n" is the number of available spectral characteristics in the pallet and "r" is the number of filter positions +1. For example in the case of FIG. 2 the tags have four different filter positions. Therewith the value of r is equal to 5. Also it is presumed that the value for n is equal to 5. In that case, it can be seen in the table that the number of mutually different tags possible is equal to 100. The number of mutually different tags that can be achieved can be substantially higher if desired, by increasing the number of available spectral characteristics in the pallet and/or the number of filter positions.

Alternatively a system with a smaller set of mutually distinguishable tags may be provided as illustrated for example in FIG. 3. In that example n = 3 and r = 4. Therewith 13 different tags are possible.

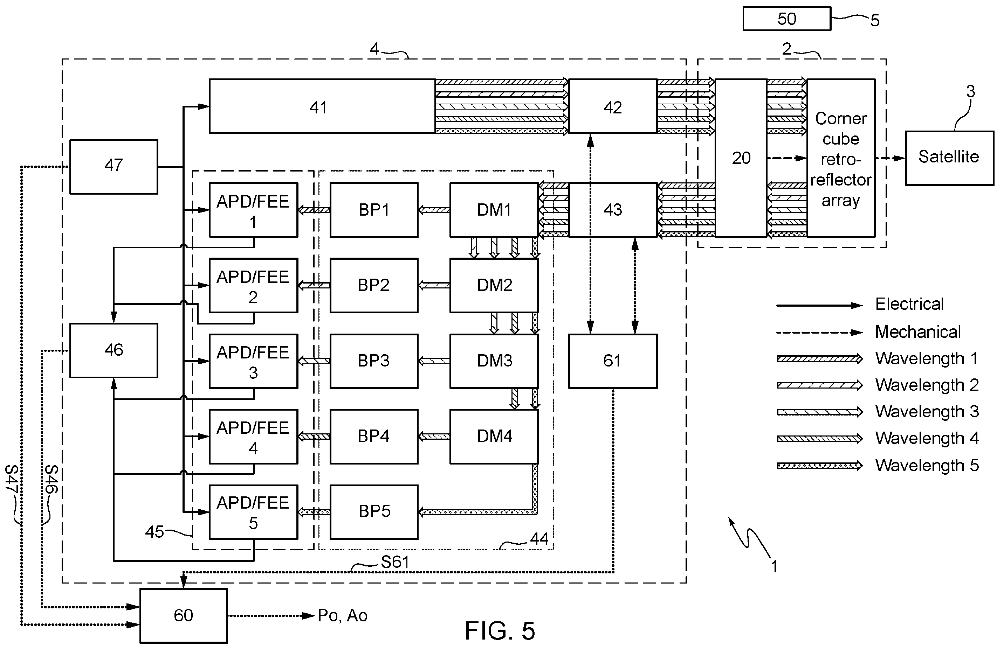

FIG. 5 shows an alternative embodiment of the identification system 1 that further comprises a tracking module 60 configured to track a position Po and/or attitude Ao of an orbital object. In the example shown, this is achieved in that the identification system is configured to estimate the distance of the orbital object with a time of flight measurement. For that purpose, the tracking module receives a first input signal S47 from the laser controller 47 that indicates a point in time at which a laser pulse is transmitted and a second input signal S46 from the signal processor 46 indicative for the point in time the reflection is received. Therewith the tracking module 60 can compute the distance of the orbital object. In the example shown, the tracking module 60 also receives a third input signal S61 from a beam direction controller 61. Therewith the tracking module 60 can determine an angular position of the orbital object. With this combination of information the tracking module 60 can determine the cartesian coordinates of the position of the orbital object.

While the present invention has been described with respect to a limited number of embodiments, those skilled in the art will appreciate numerous modifications and variations therefrom within the scope of this present invention as determined by the appended claims.

## Claims

1. An orbital object identification system (1) comprising an identification station (4) and at least one tagged orbital object, the at least one tagged orbital object being an orbital object (3) with a retroreflecting identification tag (2) mounted thereon and; and
wherein the identification station (4) comprises:
an optical beam generator (41) configured to generate at least one beam of optical radiation;
transmission optics (42) to transmit the at least one beam in the direction of the identification tag;
receive optics (43) to receive a portion of the optical radiation that is filtered and reflected by the tag;
a detection unit to issue detection signals;
a signal processing unit (46) to identify the orbital object on the basis of the detection signals,
**characterized:**
**in that** the retroreflecting identification tag (2) comprises a spectral filter (20), 20', 20") having a surface area partitioned into respective surface area portions having respective, mutually different spectral characteristics,
**in that** the identification station (4) further comprises a demultiplexing unit (44) to separate the received portion of the optical radiation into a plurality of respective spectral components;
**in that** the detection unit (45) has respective photodetection components (ADP/FEE 1,2,3,4,5) to issue respective detection signals indicative of respective magnitudes of the respective spectral components;
and **in that** the optical beam generator (41) is configured to generate the at least one beam of optical radiation with controllable spectral properties in that it comprises a single optical beam source with a tunable wavelength wherein the identification system is configured to cause the optical beam source to generate the at least one beam with a time dependent central wavelength, and/or in that it comprises a suite of optical beam sources having mutually different fixed wavelengths, wherein the identification system is configured to selectively activate one or more of the optical beam sources.

2. The identification system according to claim 1, wherein the spectral filter (20) of the tag (2) comprises respective bandpass filters in respective surface area portions (21a, 21b, 21c).

3. The identification system according to claim 1 or 2, wherein the spectral filter of the tag (2) comprises respective notch filters in respective surface area portions.

4. The orbital object identification system (1) according to any of the preceding claims, wherein surface area portions (21a, 21b, 21c) have a value k/K, wherein k and K are natural numbers and wherein k is in the range from 0 to K.

5. The orbital object identification system (1) according to claim 4, wherein surface area portions have a value of at least 1/K for each spectral characteristic in a pallet set of spectral characteristics.

6. The orbital object identification system (1) according to claim 4, further comprising a retroreflecting calibration tag (5) mounted on the at least one orbital object (3), which calibration tag (5) comprises a spectral filter (50) with a respective predetermined, non-zero surface area portion (51a, 51b, 51c, 51d, 51e) for each spectral characteristic in a pallet set of spectral characteristics.

7. The orbital object identification system (1) according to any of the preceding claims, wherein the identification tag is one of a plurality of identification tags mounted in a distributed manner on the at least one tagged orbital object, which plurality of identification tags have the same partitioning of their surface area for the mutually different spectral characteristics.

8. The orbital object identification system (1) according to any of the preceding claims, wherein the demultiplexing unit (44) comprises a chain of optical demultiplexing elements (DM1, DM2, DM3, DM4) that are each configured to selectively redirect a respective spectral fraction of incoming optical radiation and to transmit a remaining spectral fraction of the incoming optical radiation so as to separate the received portion of the optical radiation into respective optical channels for the respective photodetection components.

9. The orbital object identification system (1) according to claim 8, wherein the demultiplexing unit (44) further comprises in at least one spectral channel at least one band-pass filter.

10. The identification system according to any of the preceding claims, wherein the identification station further comprises a tracking module (60) configured to track a position and/or attitude (Po, Ao) of an orbital object.

11. A method of identifying an orbital object comprising:
mounting a retroreflecting identification tag (2) on the orbital object (3);
generating at least one beam of optical radiation;
transmitting the at least one beam of optical radiation in the direction of the identification tag (2);
receiving a portion of the optical radiation as a result of retroreflection and filtering by the tag (2);
providing respective detection signals; indicative for respective magnitudes of the respective components;
identifying the orbital object (3) on the basis of the combination of respective detection signals,
**characterized:**
**in that** the retroreflecting identification tag (2) is provided with a spectral filter (20, 20', 20") that has a surface area partitioned into respective surface area portions having respective, mutually different spectral characteristics,
**in that** the received optical radiation is separated into a plurality of respective spectral components;
**in that** the respective detection signals that are provided are indicative for respective magnitudes of the respective spectral components;
and **in that** said generating comprises:
with a single optical beam source with a tunable wavelength generating the at least one beam having a time dependent central wavelength
and/or with a suite of optical beam sources having mutually different fixed wavelengths generating the at least one beam, therewith selectively activating one or more of the optical beam sources.

## Patentansprüche

1. Orbitalobjekt-Identifikationssystem (1), umfassend eine Identifikationsstation (4) und mindestens ein markiertes Orbitalobjekt, wobei das mindestens eine markierte Orbitalobjekt ein Orbitalobjekt (3) ist, auf dem eine retroreflektierende Identifikationsmarkierung (2) angebracht ist und; und
wobei die Identifikationsstation (4) umfasst:
einen optischen Strahlgenerator (41), der dazu konfiguriert ist, mindestens einen Strahl optischer Strahlung zu erzeugen;
eine Sendeoptik (42) zum Senden des mindestens einen Strahls in Richtung der Identifikationsmarkierung;
eine Empfangsoptik (43) zum Empfangen eines Teils der optischen Strahlung, der durch die Markierung gefiltert und reflektiert wird;
eine Erfassungseinheit zum Ausgeben von Erfassungssignalen;
eine Signalverarbeitungseinheit (46) zum Identifizieren des Orbitalobjekts auf der Grundlage der Erfassungssignale,
**dadurch gekennzeichnet, dass**:
die retroreflektierende Identifikationsmarkierung (2) einen Spektralfilter (20, 20', 20") umfasst, der eine Oberfläche aufweist, die in jeweilige Oberflächenabschnitte unterteilt ist, die jeweilige, voneinander verschiedene Spektraleigenschaften aufweisen,
die Identifikationsstation (4) ferner eine Demultiplexeinheit (44) umfasst, um den empfangenen Teil der optischen Strahlung in eine Vielzahl von jeweiligen Spektralkomponenten aufzuteilen;
die Erfassungseinheit (45) jeweilige Photodetektionskomponenten (ADP/FEE 1,2,3,4,5) aufweist, um jeweilige Erfassungssignale auszugeben, die für jeweilige Größen der jeweiligen Spektralkomponenten indikativ sind;
und dass der optische Strahlgenerator (41) dazu konfiguriert ist, den mindestens einen Strahl optischer Strahlung mit steuerbaren Spektraleigenschaften zu erzeugen, wobei er eine einzelne optische Strahlquelle mit einstellbarer Wellenlänge umfasst, wobei das Identifikationssystem dazu konfiguriert ist, die optische Strahlquelle zu veranlassen, den mindestens einen Strahl mit einer zeitabhängigen Mittenwellenlänge zu erzeugen, und/oder wobei er eine Gruppe von optischen Strahlquellen mit voneinander verschiedenen festen Wellenlängen umfasst, wobei das Identifikationssystem dazu konfiguriert ist, eine oder mehrere der optischen Strahlquellen selektiv zu aktivieren.

2. Identifikationssystem nach Anspruch 1, wobei der Spektralfilter (20) der Markierung (2) jeweilige Bandpassfilter in jeweiligen Oberflächenabschnitten (21a, 21b, 21c) umfasst.

3. Identifikationssystem nach Anspruch 1 oder 2, wobei der Spektralfilter der Markierung (2) jeweilige Kerbfilter in jeweiligen Oberflächenabschnitten umfasst.

4. Orbitalobjekt-Identifikationssystem (1) nach einem der vorstehenden Ansprüche, wobei Oberflächenabschnitte (21a, 21b, 21c) einen Wert k/K aufweisen, wobei k und K natürliche Zahlen sind und wobei k im Bereich von 0 bis K liegt.

5. Orbitalobjekt-Identifikationssystem (1) nach Anspruch 4, wobei Oberflächenabschnitte für jede Spektraleigenschaft in einem Palettensatz von Spektraleigenschaften einen Wert von mindestens 1/K aufweisen.

6. Orbitalobjekt-Identifikationssystem (1) nach Anspruch 4, ferner umfassend eine retroreflektierende Kalibrierungsmarkierung (5), die auf dem mindestens einen Orbitalobjekt (3) angebracht ist, wobei die Kalibrierungsmarkierung (5) einen Spektralfilter (50) mit einem jeweiligen vorbestimmten, von Null verschiedenen Oberflächenabschnitt (51a, 51b, 51c, 51d, 51e) für jede Spektraleigenschaft in einem Palettensatz von Spektraleigenschaften umfasst.

7. Orbitalobjekt-Identifikationssystem (1) nach einem der vorstehenden Ansprüche, wobei die Identifikationsmarkierung eine von einer Vielzahl von Identifikationsmarkierungen ist, die in verteilter Weise auf dem mindestens einen markierten Orbitalobjekt angebracht sind, wobei die Vielzahl von Identifikationsmarkierungen die gleiche Unterteilung ihrer Oberfläche für die voneinander verschiedenen Spektraleigenschaften aufweist.

8. Orbitalobjekt-Identifikationssystem (1) nach einem der vorstehenden Ansprüche, wobei die Demultiplexeinheit (44) eine Kette von optischen Demultiplexelementen (DM1, DM2, DM3, DM4) umfasst, die jeweils dazu konfiguriert sind, einen jeweiligen Spektralanteil der einfallenden optischen Strahlung selektiv umzulenken und einen verbleibenden Spektralanteil der einfallenden optischen Strahlung zu übertragen, um den empfangenen Teil der optischen Strahlung in jeweilige optische Kanäle für die jeweiligen Photodetektionskomponenten aufzuteilen.

9. Orbitalobjekt-Identifikationssystem (1) nach Anspruch 8, wobei die Demultiplexeinheit (44) ferner in mindestens einem Spektralkanal mindestens einen Bandpassfilter umfasst.

10. Identifikationssystem nach einem der vorstehenden Ansprüche, wobei die Identifikationsstation ferner ein Verfolgungsmodul (60) umfasst, das dazu konfiguriert ist, eine Position und/oder Lage (Po, Ao) eines Orbitalobjekts zu verfolgen.

11. Verfahren zum Identifizieren eines Orbitalobjekts, umfassend:
Anbringen einer retroreflektierenden Identifikationsmarkierung (2) auf dem Orbitalobjekt (3);
Erzeugen mindestens eines Strahls optischer Strahlung;
Senden des mindestens einen Strahls optischer Strahlung in Richtung der Identifikationsmarkierung (2);
Empfangen eines Teils der optischen Strahlung infolge von Retroreflexion und Filterung durch die Markierung (2);
Bereitstellen von jeweiligen Erfassungssignalen; indikativ für jeweilige Größen der jeweiligen Komponenten;
Identifizieren des Orbitalobjekts (3) auf der Grundlage der Kombination von jeweiligen Erfassungssignalen,
**dadurch gekennzeichnet, dass**:
die retroreflektierende Identifikationsmarkierung (2) mit einem Spektralfilter (20, 20', 20") versehen ist, der eine Oberfläche aufweist, die in jeweilige Oberflächenabschnitte unterteilt ist, die jeweilige, voneinander verschiedene Spektraleigenschaften aufweisen,
die empfangene optische Strahlung in eine Vielzahl von jeweiligen Spektralkomponenten aufgeteilt wird;
die bereitgestellten jeweiligen Erfassungssignale für jeweilige Größen der jeweiligen Spektralkomponenten indikativ sind;
und dass das Erzeugen umfasst:
mit einer einzelnen optischen Strahlquelle mit einstellbarer Wellenlänge, Erzeugen des mindestens einen Strahls mit einer zeitabhängigen Mittenwellenlänge
und/oder mit einer Gruppe von optischen Strahlquellen mit voneinander verschiedenen festen Wellenlängen, Erzeugen des mindestens einen Strahls, wodurch eine oder mehrere der optischen Strahlquellen selektiv aktiviert werden.

## Revendications

1. Système d'identification d'objet orbital (1) comprenant une station d'identification (4) et au moins un objet orbital étiqueté, l'au moins un objet orbital étiqueté étant un objet orbital (3) sur lequel est montée une étiquette (2) d'identification rétroréfléchissante, et ;
dans lequel la station d'identification (4) comprend :
un générateur de faisceaux optiques (41) configuré pour générer au moins un faisceau de rayonnement optique ;
des optiques d'émission (42) pour émettre l'au moins un faisceau dans la direction de l'étiquette d'identification ;
des optiques de réception (43) pour recevoir une partie du rayonnement optique qui est filtrée et réfléchie par l'étiquette ;
une unité de détection pour émettre des signaux de détection ;
une unité de traitement de signaux (46) pour identifier l'objet orbital sur la base des signaux de détection,
**caractérisé :**
**en ce que** l'étiquette (2) d'identification rétroréfléchissante comprend un filtre spectral (20, 20', 20") dont une superficie est divisée en parties de superficie respectives ayant des caractéristiques spectrales respectives mutuellement différentes,
**en ce que** la station d'identification (4) comprend en outre une unité de démultiplexage (44) pour séparer la partie reçue du rayonnement optique en une pluralité de composantes spectrales respectives ;
**en ce que** l'unité de détection (45) a des composants de photodétection (ADP/FEE 1, 2, 3, 4, 5) respectifs pour émettre des signaux de détection respectifs indiquant des grandeurs respectives des composantes spectrales respectives ;
et **en ce que** le générateur de faisceaux optiques (41) est configuré pour générer l'au moins un faisceau de rayonnement optique ayant des propriétés spectrales contrôlables, en ce qu'il comprend une source de faisceau optique unique à longueur d'onde accordable, dans lequel le système d'identification est configuré pour amener la source de faisceau optique à générer l'au moins un faisceau avec une longueur d'onde centrale dépendante du temps, et/ou en ce qu'il comprend une série de sources de faisceaux optiques ayant des longueurs d'onde fixes mutuellement différentes, dans lequel le système d'identification est configuré pour activer sélectivement une ou plusieurs des sources de faisceaux optiques.

2. Système d'identification selon la revendication 1, dans lequel le filtre spectral (20) de l'étiquette (2) comprend des filtres passe-bande respectifs dans des parties de superficie (21a, 21b, 21c) respectives.

3. Système d'identification selon la revendication 1 ou 2, dans lequel le filtre spectral de l'étiquette (2) comprend des filtres à encoche respectifs dans des parties de superficie respectives.

4. Système d'identification d'objet orbital (1) selon l'une des revendications précédentes, dans lequel les parties de superficie (21a, 21b, 21c) ont une valeur k/K, où k et K sont des nombres naturels et où k se situe dans la plage entre 0 et K.

5. Système d'identification d'objet orbital (1) selon la revendication 4, dans lequel les parties de superficie ont une valeur d'au moins 1/K pour chaque caractéristique spectrale d'un ensemble d'une palette de caractéristiques spectrales.

6. Système d'identification d'objet orbital (1) selon la revendication 4, comprenant en outre une étiquette d'étalonnage (5) rétroréfléchissante montée sur l'au moins un objet orbital (3), laquelle étiquette d'étalonnage (5) comprend un filtre spectral (50) ayant une partie de superficie (51a, 51b, 51c, 51d, 51e) non nulle prédéterminée respective pour chaque caractéristique spectrale d'un ensemble d'une palette de caractéristiques spectrales.

7. Système d'identification d'objet orbital (1) selon l'une des revendications précédentes, dans lequel l'étiquette d'identification est l'une d'une pluralité d'étiquettes d'identification montées de manière répartie sur l'au moins un objet orbital étiqueté, les superficies de ladite pluralité d'étiquettes d'identification ayant les mêmes divisions de caractéristiques spectrales mutuellement différentes.

8. Système d'identification d'objet orbital (1) selon l'une des revendications précédentes, dans lequel l'unité de démultiplexage (44) comprend une chaîne d'éléments de démultiplexage optique (DM1, DM2, DM3, DM4) qui sont chacun configurés pour rediriger sélectivement une fraction spectrale respective d'un rayonnement optique entrant, et pour émettre une fraction spectrale restante du rayonnement optique entrant de manière à séparer la partie reçue du rayonnement optique en canaux optiques respectifs destinés aux composants de photodétection respectifs.

9. Système d'identification d'objet orbital (1) selon la revendication 8, dans lequel l'unité de démultiplexage (44) comprend en outre au moins un filtre passe-bande dans au moins un canal spectral.

10. Système d'identification selon l'une des revendications précédentes, dans lequel la station d'identification comprend en outre un module de suivi (60) configuré pour suivre une position et/ou une attitude (Po, Ao) d'un objet orbital.

11. Procédé d'identification d'un objet orbital comprenant les étapes suivantes :
monter une étiquette (2) d'identification rétroréfléchissante sur l'objet orbital (3) ;
générer au moins un faisceau de rayonnement optique ;
émettre l'au moins un faisceau de rayonnement optique dans la direction de l'étiquette (2) d'identification ;
recevoir une partie du rayonnement optique comme résultat de rétro-réflexion et de filtrage par l'étiquette (2) ;
fournir des signaux de détection respectifs indiquant des grandeurs respectives des composantes respectives ;
identifier l'objet orbital (3) sur la base de la combinaison de signaux de détection respectifs,
**caractérisé :**
**en ce que** l'étiquette (2) d'identification rétroréfléchissante est pourvue d'un filtre spectral (20, 20', 20") dont une superficie est divisée en parties de superficie respectives ayant des caractéristiques spectrales respectives mutuellement différentes,
**en ce que** le rayonnement optique reçu est séparé en une pluralité de composantes spectrales respectives ;
**en ce que** les signaux de détection respectifs qui sont fournis indiquent des grandeurs respectives des composantes spectrales respectives ;
et **en ce que** ladite génération comprend :
à l'aide d'une source de faisceau optique unique à longueur d'onde accordable, générer l'au moins un faisceau ayant une longueur d'onde centrale dépendante du temps,
et à l'aide d'une série de sources de faisceaux optiques ayant des longueurs d'onde fixes mutuellement différentes, générer l'au moins un faisceau, activant ainsi sélectivement une ou plusieurs des sources de faisceaux optiques.
